# EUROPEAN PATENT SPECIFICATION

(11) **EP 2 238 801 B1**
(45) Date of publication and mention of the grant of the patent: **17.04.2013**
(21) Application number: 08865341.5
(22) Date of filing: 07.10.2008
(51) Int. Cl.: H04W 72/12

(54) **RELEASING COMMON ENHANCED DEDICATED CHANNEL, E-DCH, RADIO RESOURCES**
FREIGABE GEMEINSAMER E-DCH-FUNKRESSOURCEN
LIBÉRATION DE RESSOURCES RADIO DE CANAL COMMUN DÉDIÉ AMÉLIORÉ, E-DCH

(30) Priority: 20.12.2007 US 15316 P
(43) Date of publication of application: 13.10.2010
(60) Divisional application: 10164034.0
(73) Proprietor: Telefonaktiebolaget LM Ericsson (publ), 164 83 Stockholm (SE)
(72) Inventor: WAGER, Stefan, FI-02360 Espoo (FI); BERGMAN, Johan, 112 27 Stockholm (SE); ENBUSKE, Henrik, S-11341 Stockholm (SE); PRADAS, Jose, FI-02420 Jorvas (FI)
(74) Representative: Kühn, Friedrich Heinrich
(86) International application number: PCT/SE2008/051133
(87) International publication number: WO 2009/082329

(56) References cited:
- WO-A-2007/023351
- WO-A-2007/089797
- US-A1- 2002 141 331
- US-A1- 2004 116 143
- US-A1- 2006 215 604
- US-A1- 2007 049 309
- US-A1- 2007 060 142
- M. WIMMER - NSN: "Status Report for WI to TSG - Work Item: Enhanced Uplink for CELL_FACH State in FDD"[Online] no. RP-070825, 27 November 2007 (2007-11-27), pages 1-4, XP002514178 TSG-RAN meeting #37; Cancun, Mexico, Nov. 27th-30th 2007 Retrieved from the Internet: URL:http://www.3gpp.org/ftp/tsg_ran/TSG_RA N/TSGR_38/Docs/> [retrieved on 2009-02-09]
- QUALCOMM EUROPE: "Layer 1/2 aspects for enhanced UL for CELL_FACH" 3GPP DRAFT; R2-074390, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG2_RL2\TSGR2_59bis\Docs, no. Shanghai, China; 20071008, 1 October 2007 (2007-10-01), XP050136960
- INFINEON: "Resource release mechanisms for CELL_FACH E-DCH" 3GPP DRAFT; R2-080148, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG2_RL2\TSGR2_60bis\Docs, no. Sevilla, Spain; 20080114, 8 January 2008 (2008-01-08), XP050138028
- ERICSSON: "Resource release of common E-DCH in CELL_FACH" 3GPP DRAFT; R2-080044, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG2_RL2\TSGR2_60bis\Docs, no. Sevilla, Spain; 20080114, 7 January 2008 (2008-01-07), XP050137944
- INFINEON: "CELL_FACH E-DCH scheduling simplifications" 3GPP DRAFT; R2-080894, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG2_RL2\TSGR2_61\Docs, no. Sorrento, Italy; 20080211, 4 February 2008 (2008-02-04), XP050138703

## Description

### TECHNICAL FIELD

The present invention relates to a method and a device for allocating E-DCH resources in a cellular radio system.

### BACKGROUND

In release 8 of the third generation partnership project (3GPP), work is ongoing to improve the uplink performance in the so called CELL_FACH state. CELL_FACH is a Radio Resource Control (RRC) state in which the User Equipment (UE) is known on cell level (i.e. has a cell id), has a layer 2 connection but no dedicated physical layer resource associated therewith. Instead, common physical layer resources are shared between different User Equipments in the CELL_FACH state.

One planned uplink improvement planned for future improvement of cellular radio systems is the activation also in CELL_FACH of the Enhanced Dedicated Channel (E-DCH) physical channel, which is normally used as a dedicated physical layer channel in CELL_DCH state with one separate E-DCH resource allocated per user. This can be performed by using a pool of E-DCH resources that can be temporarily assigned to a user in the CELL_FACH state. Such a pool of E-DCH resources can be termed common E-DCH resources. E-DCH resources are conventionally managed by a Radio Network Controller (RNC). However the pool of common E-DCH resources is to be managed by the radio base station NodeB to speed up the allocation of resources by not having to involve the RNC in the allocation procedure. The common E-DCH configurations are broadcasted to UEs located in a cell.

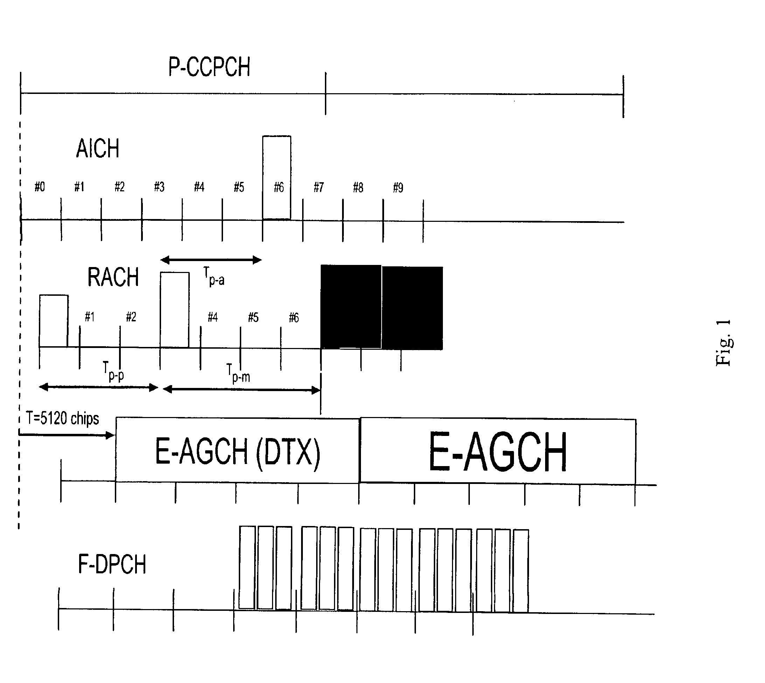

In Fig. 1 common E-DCH transmission in CELL_FACH state is shown. The procedure to access the common E-DCH channel in CELL_FACH starts in a manner corresponding to Rel-99 Random Access Channel (RACH) transmission, with preamble power ramping using randomly selected preamble signatures. Having detected the preamble, the NodeB acknowledges reception using an Acquisition Indication Channel (AICH) sequence. It also informs the UE which common E-DCH resource it has assigned to the UE.

A common E-DCH resource is defined by:
an Up -Link (UL) scrambling code
an E-DCH Radio Network Temporary Identifier (E-RNTI)
a Fractional - Dedicated Physical CHannel (F-DPCH) code and timing offset E-DCH Absolute Grant Channel (E-AGCH)/ E-DCH Relative Grant Channel (E-RGCH)/ E-DCH HARQ Acknowledgement Indicator CHannel (E-HICH) codes and signatures, and High Speed Dedicated Physical Control Channel (HS-DPCCH) parameters such as power offsets and Channel Quality Indicator (CQI).

In the currently proposed architecture the set of common E-DCH resources available in each cell is limited. Also, it will not be possible to indicate an unlimited number of configurations in the AICH response and also NodeB and air interface resources need to be reserved for each common E-DCH resource. Hence, the E-DCH resources needs to be efficiently used.

In accordance with the above, there exist a need for a method and a system that is able to efficiently use E-DCH resources.

Document "Qualcomm: Layer 1/2 aspects for enhanced UL for CELL_FACH; R2-074390; 02-10-2007" teaches, for a UE in CELL_FACH state, that an uplink resource release may occur, if the NodeB senses inactivity on the user's uplink channel. In that case, the NodeB will send a Layer-2 (MAC) Uplink Resource Release message to the UE. The UE will acknowledge this message via another Layer-2 message and then release the uplink channel resource.

### SUMMARY

It is an object of the present invention to provide a method and a user equipment that is able to efficiently use E-DCH resources.

This object and others are obtained by the method, and the User Equipment as set out in the appended claims. In order to make more efficient use of the E-DCH resources it has been recognized that it is advantageous if each UE can release the common E-DCH resource as quickly as possible after a completed transmission. In addition it has been recognized that in some error cases also be beneficial for the NodeB to have a mechanism to release common E-DCH configurations for use by a new user.

In accordance with the present invention a fast and effective method of signaling the release of common E-DCH resources between UE and NodeB is provided, according to independent claim 1.

In accordance with the present invention the release of the common E-DCH resources is signaled between UE and NodeB using existing signaling fields on Layer 2 (L2) or Layer 1 (L1). These signaling fields are already in use in CELL_DCH, but can be given a different meaning for users in CELL_FACH.

### BRIEF DESCRIPTION OF THE DRAWINGS

The present invention will now be described in more detail by way of non-limiting examples and with reference to the accompanying drawings, in which:
- Fig. 1 is a view illustrating common E-DCH transmission in CELL_FACH,
- Fig. 2 is a view illustrating a cellular radio system,
- Fig. 3 is a flow chart illustrating steps performed when releasing a common E-DCH resource,
- Fig. 4 is a flow chart illustrating steps performed when releasing a common E-DCH resource, and

Fig. 5 is a flow chart illustrating steps performed when releasing a common E-DCH resource.

### DETAILED DESCRIPTION

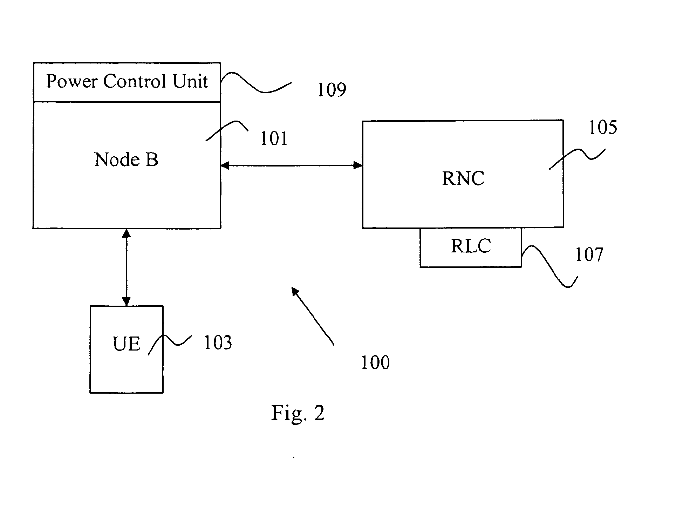

In Fig.2, a general view of a WCDMA system 100 is depicted. The system 100 comprises a base station (Node B) 101. The base station 101 serves a number of mobile terminals, usually termed User Equipment (UE) 103, located within the area covered by the base station 101. The base station 101 is also connected to a radio network controller node (RNC) 105. The RNC 105 typically also includes a Radio link controller node (RLC) 107. The RLC 107 is among other things responsible for detecting errors. The system 100 also comprises a power control unit 109, which preferably is co-located or an integral part of the base station 101.

In release 6, the WCDMA specification is extended with a new uplink transport channel, the Enhanced Dedicated Channel (E-DCH). The enhanced uplink (EUL) is a natural complement to High Speed Downlink Packet Access (HSDPA) for high-performance packet-data applications.

In accordance with the present invention the release of the common E-DCH resources is signaled between UE and NodeB using existing signaling fields on Layer 2 (L2) or Layer 1 (L1). These signaling fields are already in use in CELL_DCH, but their interpretation is changed for users in CELL_FACH.

In accordance with one embodiment of the present invention the UE can trigger release of an E-DCH resource. For example once a UE in CELL_FACH transmitting on a common E-DCH resource has emptied its Radio Link Protocol transmit buffer, it can be configured to include the Scheduling Information (SI) field in the last Media Access Control (MAC) Packet Data Unit (PDU), indicating buffer status = 0. In particular the Total E-DCH Buffer Status (TEBS) can be set to 0. For users in CELL_FACH, the NodeB can be configured to interpret such a field as a signal that the UE has finished transmission, and will release the common E-DCH resource. In particular the radio base station NodeB can release the common E-DCH resource as soon as all Hybrid Automatic Repeat Request (HARQ) processes are finished. It can be observed that even when the HARQ process carrying the last MAC PDU with the SI field has completed, there may still be previous HARQ processes that have not yet completed. In accordance with one embodiment the NodeB is configured to release the common E-DCH resource, making it available for use by other users, once all HARQ processes have finished or when the reordering timer T1 has expired for the last MAC PDU.

In another embodiment of the present invention, the E-DCH - Transport Format Combination Identifier (E-TFCI) or the Happy bit on the physical layer control channel E-DPCCH is used to indicate release of the common E-DCH resource. As these indicators can be more error prone, such indicators can in one embodiment be used in combination with the SI field in the MAC PDU.

In accordance with one embodiment the UE is configured to release the common E-DCH resources once it has received an ACK for all HARQ processes, or reached the maximum number of HARQ transmissions. Also when the common E-DCH resources are released and new data is received from higher layer to be transmitted, the UE can be configured to start transmission by transmitting preambles to request a new common E-DCH resource.

To cover for error cases, like signaling errors or if a UE has moved out of coverage, the NodeB can also use a release timer to release the common E-DCH resource. For example, the release timer can be started when the common E-DCH resource is assigned to a UE. Once Uplink transmission has been detected, the timer is stopped and preferably reset. Detection of uplink transmission can for example be based on thresholds for the estimated Bit Error Rate (BER) or Signal to Noise Ratio (SNR) or similar of the up link DPCCH channel. If the uplink DPCCH is lost during transmission, due to e.g. a user has moved out of coverage, the timer is again started. If the uplink DPCCH is not detected from the user until the release timer expires, the common E-DCH resource is released in NodeB. Once the E-DCH resource is released by the radio base station NodeB, the E-DCH resource is released for use by other UEs.

The radio base station NodeB may also be configured to stop a UE from transmitting on a common E-DCH resource by sending a grant on E-AGCH indicating INACTIVE on all HARQ processes as a release command. The UE is then configured to interpret such a signaling as a signal to release the common E-DCH resource. As a consequence, when the UE receives a grant on E-AGCH indicating INACTIVE on all HARQ processes the UE releases the common E-DCH resource, which then is available for use by other UEs.

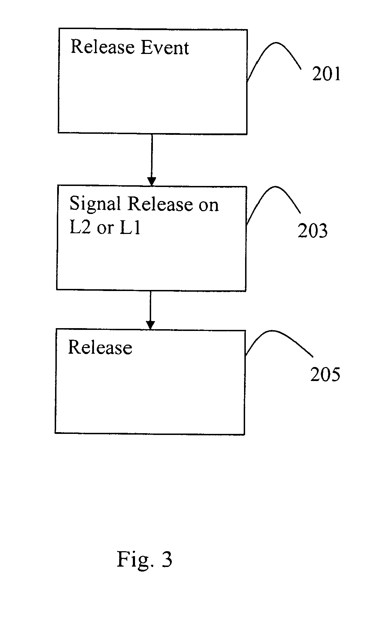

In Fig. 3 a flow chart illustrating steps performed when releasing a common E-DCH resource is shown. First in a step 201 it is determined in a User Equipment that a common E-DCH resource is to be released. An event triggering the release of an E-DCH can for example be a UE in CELL_FACH transmitting on a common E-DCH resource has emptied its Radio Link Protocol transmit buffer. Next, in a step 203, the UE signals to the radio base station the release of a common Enhanced Dedicated Channel (E-DCH) resource. In particular the signaling of the release of the common Enhanced Dedicated Channel (E-DCH) resource can be signaled Layer 1 or Layer 2 fields used in a CELL_DCH state for other purposes. For example the release can be signaled by including the Scheduling Information (SI) field in the last Media Access Control (MAC) Packet Data Unit (PDU). In response to a signaled release of a common Enhanced Dedicated Channel, E-DCH, resource from a UE, the radio base station NodeB releases the corresponding common Enhanced Dedicated Channel, E-DCH, resource, in a step 205 which then can be used for another user.

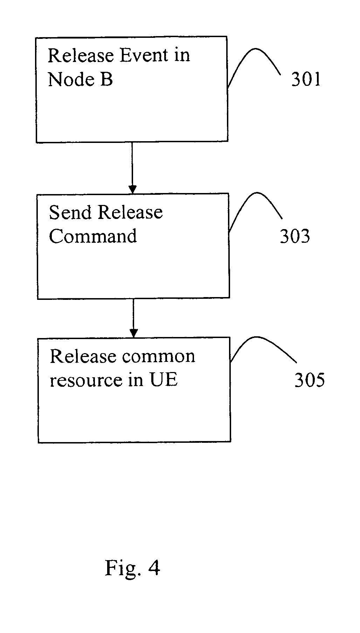

In Fig. 4 a flow chart illustrating steps performed when releasing a common E-DCH resource is shown. First in a step 301 it is determined in a radio base station Node B that a common E-DCH resource is to be released. Next, in a step 303, the radio base station NodeB stops a UE from transmitting on a common E-DCH resource by sending a grant on E-AGCH indicating INACTIVE on all HARQ processes as a release command. The UE is then configured to interpret such a signaling as a signal to release the common E-DCH resource in a step 305. As a consequence, when the UE receives a grant on E-AGCH indicating INACTIVE on all HARQ processes the UE releases the common E-DCH resource, which then is available for use by other UEs.

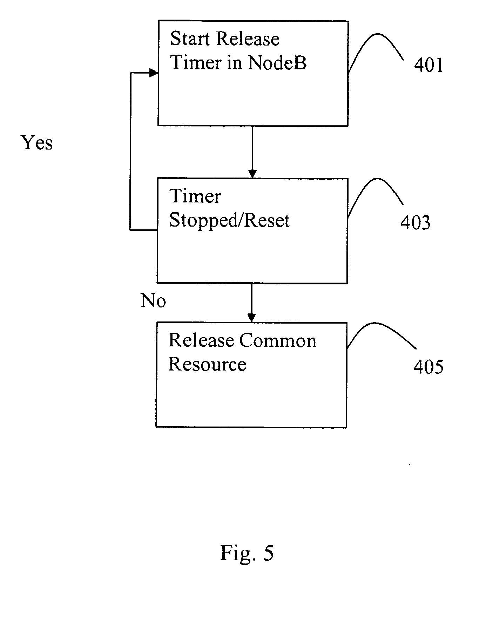

In Fig. 5 a flow chart illustrating steps performed when releasing a common E-DCH resource is shown. First in a step 401 a release timer is started when the common E-DCH resource is assigned to a UE. Once Uplink transmission has been detected, the timer is stopped and preferably reset in a step 403. Detection of uplink transmission can for example be based on thresholds for the estimated Bit Error Rate (BER) or Signal to Noise Ratio (SNR) or similar of the up link DPCCH channel. If the uplink DPCCH is lost during transmission, due to e.g. a user has moved out of coverage, the timer is again started. If the uplink DPCCH is not detected from the user until the release timer expires, the common E-DCH resource is released in a step 405 in NodeB. Once the E-DCH resource is released by the radio base station NodeB, the E-DCH resource is released for use by other UEs.

By using the method UE and radio base station as described herein a fast and reliable release of common E-DCH is obtained. This in turn will increase the E-DCH capacity in CELL_FACH.

## Claims

1. A method for a Wideband Code Division Multiple Access, WCDMA, User Equipment, UE, of releasing a common Enhanced Dedicated Channel, E-DCH, resource, the UE being in a CELL_FACH state, the UE being connected to a radio base station, comprising the step of:
signaling (203) to the radio base station a release of a common Enhanced Dedicated Channel, E-DCH, resource on Layer 1 or Layer 2 fields used in a CELL_DCH state for other purposes.

2. The method according to claim 1, wherein the common Enhanced Dedicated Channel, E-DCH, resource is released when the UE has emptied (201) its Radio Link Protocol transmit buffer.

3. The method according to claim 1 or 2, wherein the release is signaled (203) by including the Scheduling Information, SI, field in the last Media Access Control, MAC, Packet Data Unit, PDU.

4. The method according to claim 3, wherein the buffer status is set to 0.

5. The method according to any of claims 1 - 4, wherein the release is signaled (203) by the E-DCH - Transport Format Combination Identifier, E-TFCI, or the Happy bit on the physical layer control channel E-DPCCH to indicate release of the common E-DCH resource.

6. The method according to any of claims 1 - 5, wherein the UE releases the common E-DCH resources upon reception of an Acknowledgement, ACK, for all Hybrid Automatic Repeat Request, HARQ, processes, or upon reach of the maximum number of HARQ transmissions.

7. The method according to any of claims 1 - 6, wherein the common Enhanced Dedicated Channel, E-DCH, resource is released (201) when a reordering timer has expired for the last Media Access Control, MAC, Packet Data Unit, PDU.

8. A Wideband Code Division Multiple Access, WCDMA User Equipment, UE, (103) being connectable to a radio base station (101), the UE being adapted to release a common. Enhanced Dedicated Channel, E-DCH, when in a CELL_FACH state, wherein the UE is adapted to signal to the radio base station a release of a common Enhanced Dedicated Channel, E-DCH, resource on Layer 1 or Layer 2 fields used in a CELL_DCH state for other purposes.

9. The UE according to claim 8, wherein the UE is adapted to release the common Enhanced Dedicated Channel, E-DCH, resource when the UE has emptied its Radio Link Protocol transmit buffer.

10. The UE according to claim 8 or 9, wherein the UE is adapted to signal the release by including the Scheduling Information, SI, field in the last Media Access Control, MAC, Packet Data Unit, PDU.

11. The UE according to claim 10, wherein the UE is adapted to set the buffer status to 0.

12. The UE according to any of claims 8 - 11, wherein the UE is adapted to signal the release by the E-DCH - Transport Format Combination Identifier, E-TFCI, or the Happy bit on the physical layer control channel E-DPCCH to indicate release of the common E-DCH resource.

13. The UE according to any of claims 8 - 12, wherein the UE is configured to release the common E-DCH resources upon reception of an Acknowledgement, ACK, for all Hybrid Automatic Repeat Request, HARQ, processes, or upon reach of the maximum number of HARQ transmissions.

14. The UE according to any of claims 8 - 13, wherein the UE is adapted to release the common Enhanced Dedicated Channel, E-DCH, resource when a reordering timer has expired for the last Media Access Control, MAC, Packet Data Unit, PDU.

## Patentansprüche

1. Verfahren für ein WCDMA (Wideband Code Division Multiple Access)-Anwenderendgerät UE zum Freigeben einer gemeinsamen E-DCH (Enhanced Dedicated Channel)-Ressource, wobei das UE in einem CELL_FACH-Zustand ist, wobei das UE an eine Funkbasisstation angeschlossen ist, umfassend folgenden Schritt:
Signalisieren (203) an die Funkbasisstation einer Freigabe einer gemeinsamen E-DCH (Enhanced Dedicated Channel)-Ressource auf Ebene 1- oder Ebene 2-Feldern, die in einem CELL_DCH-Zustand für andere Zwecke verwendet werden.

2. Verfahren nach Anspruch 1, wobei die gemeinsame E-DCH (Enhanced Dedicated Channel)-Ressource freigegeben wird, wenn das UE seinen Radio Link Protocol-Sendezwischenspeicher geleert hat (201).

3. Verfahren nach Anspruch 1 oder 2, wobei die Freigabe signalisiert wird (203), indem das SI (Scheduling Information)-Feld in die letzte MAC (Media Access Control)-PDU (Packet Data Unit) eingefügt wird.

4. Verfahren nach Anspruch 3, wobei der Zwischenspeicherstatus auf 0 gestellt ist.

5. Verfahren nach einem der Ansprüche 1 bis 4, wobei die Freigabe durch den E-DCH - E-TFCI (Transport Format Combination Identifier) oder das Happy-Bit auf dem Steuerkanal der physischen Ebene E-DPCCH signalisiert wird (203), um die Freigabe der gemeinsamen E-DCH-Ressource anzuzeigen.

6. Verfahren nach einem der Ansprüche 1 bis 5, wobei das UE die gemeinsame E-DCH-Ressource nach Empfang einer Bestätigung ACK für alle HARQ (Hybrid Automatic Repeat Request)-Prozesse oder nach Erreichen der maximalen Anzahl von HARQ-Sendungen freigibt.

7. Verfahren nach einem der Ansprüche 1 bis 6, wobei die gemeinsame E-DCH (Enhanced Dedicated Channel)-Ressource freigegeben wird (201), wenn ein Umordnungszeitgeber für die letzte MAC (Media Access Control)-PDU (Packet Data Unit) abgelaufen ist.

8. WCDMA (Wideband Code Division Multiple Access)-Anwenderendgerät UE (103), das an eine Funkbasisstation (101) anschließbar ist, wobei das UE dazu ausgebildet ist, einen gemeinsamen E-DCH (Enhanced Dedicated Channel freizugeben, wenn es sich in einem CELL_FACH-Zustand befindet, wobei das UE dazu ausgebildet ist, der Funkbasisstation eine Freigabe einer gemeinsamen E-DCH (Enhanced Dedicated Channel)-Ressource auf Ebene 1- oder Ebene 2-Feldern zu signalisieren, die in einem CELL_DCH-Zustand für andere Zwecke verwendet werden.

9. UE nach Anspruch 8, wobei das UE dazu ausgebildet ist, die gemeinsame E-DCH (Enhanced Dedicated Channel)-Ressource freizugeben, wenn das UE seinen Radio Link Protocol-Sendezwischenspeicher geleert hat.

10. UE nach Anspruch 8 oder 9, wobei das UE dazu ausgebildet ist, die Freigabe durch Einfügen des SI (Scheduling Information)-Feldes in die letzte MAC (Media Access Control)-PDU (Packet Data Unit) zu signalisieren.

11. UE nach Anspruch 10, wobei das UE dazu ausgebildet ist, den Zwischenspeicherstatus auf 0 zu stellen.

12. UE nach einem der Ansprüche 8 bis 11, wobei das UE dazu ausgebildet ist, die Freigabe durch den E-DCH - E-TFCI (Transport Format Combination Identifier) oder das Happy-Bit auf dem Steuerkanal der physischen Ebene E-DPCCH zu signalisieren, um die Freigabe der gemeinsamen E-DCH-Ressource anzuzeigen.

13. UE nach einem der Ansprüche 8 bis 12, wobei das UE zum Freigeben der gemeinsamen E-DCH-Ressourcen nach Empfang einer Bestätigung ACK für alle HARQ (Hybrid Automatic Repeat Request)-Prozesse oder nach Erreichen der maximalen Anzahl von HARQ-Sendungen konfiguriert ist.

14. UE nach einem der Ansprüche 8 bis 13, wobei das UE dazu ausgebildet ist, die gemeinsame E-DCH (Enhanced Dedicated Channel)-Ressource freizugeben, wenn ein Umordnungszeitgeber für die letzte MAC (Media Access Control)-PDU (Packet Data Unit) abgelaufen ist.

## Revendications

1. Procédé pour un équipement d'utilisateur, UE, à accès multiple à division de code à large bande, WCDMA, de libération d'une ressource de canaux spécialisés améliorés commune, E-DCH, l'équipement d'utilisateur étant dans un état CELL_FACH, l'équipement d'utilisateur étant connecté à une station de base de radio, comprenant l'étape consistant à :
signaler (203) à la station de base de radio une libération d'une ressource de canaux spécialisés améliorés commune, E-DCH, sur des trames de couche 1 ou de couche 2 utilisées dans un état CELL_DCH à d'autres fins.

2. Procédé selon la revendication 1, dans lequel la ressource de canaux spécialisés améliorés commune, E-DCH, est libérée lorsque l'équipement d'utilisateur a vidé (201) sa mémoire tampon de transmission de protocoles de liaison de radio.

3. Procédé selon la revendication 1 ou 2, dans lequel la libération est signalée (203) par l'inclusion de la trame d'information de programmation, SI, dans la dernière unité de données de paquets, PDU, de commande d'accès de média, MAC.

4. Procédé selon la revendication 3, dans lequel l'état de la mémoire tampon est établi à 0.

5. Procédé selon l'une quelconque des revendications 1 à 4, dans lequel la libération est signalée (203) par l'identifiant de combinaison de format de transport, E-TFCI, de canaux spécialisés améliorés, ou par le bit de satisfaction ("happy bit") sur le canal de commande de couche physique, E-DPCCH, de façon à indiquer la libération de la ressource de canaux spécialisés améliorés commune.

6. Procédé selon l'une quelconque des revendications 1 à 5, dans lequel l'équipement d'utilisateur libère les ressources de canaux spécialisés améliorés communes lors de la réception d'un accusé de réception, ACK, pour tous les processus de demande de répétition automatique hybride, HARQ, ou lors de l'atteinte du nombre maximal de transmissions de demande de répétition automatique hybride.

7. Procédé selon l'une quelconque des revendications 1 à 6, dans lequel la ressource de canaux spécialisés améliorés commune, E-DCH, est libérée (201) lorsqu'un minuteur de réordonnancement a expiré pour la dernière unité de données de paquets, PDU, de commande d'accès de média, MAC.

8. Equipement d'utilisateur, UE, à accès multiple à division de code à large bande, WCDMA, (103) pouvant être connecté à une station de base de radio (101), l'équipement d'utilisateur étant adapté de façon à libérer un canal spécialisé amélioré commun, E-DCH, quand il est dans un état CELL_FACH, dans lequel l'équipement d'utilisateur est adapté de façon à signaler à la station de base de radio une libération d'une ressource de canaux spécialisés améliorés commune, E-DCH, sur des trames de couche 1 ou de couche 2 utilisées dans un état CELL_DCH à d'autres fins.

9. Equipement d'utilisateur selon la revendication 8, dans lequel l'équipement d'utilisateur est adapté de façon à libérer la ressource de canaux spécialisés améliorés commune, E-DCH, lorsque l'équipement d'utilisateur a vidé sa mémoire tampon de transmission de protocoles de liaison de radio.

10. Equipement d'utilisateur selon la revendication 8 ou 9, dans lequel l'équipement d'utilisateur est adapté de façon à signaler la libération par l'inclusion de la trame d'information de programmation, SI, dans la dernière unité de données de paquets, PDU, de commande d'accès de média, MAC.

11. Equipement d'utilisateur selon la revendication 10, dans lequel l'équipement d'utilisateur est adapté de façon à établir l'état de la mémoire tampon à 0.

12. Equipement d'utilisateur selon l'une quelconque des revendications 8 à 11, dans lequel l'équipement d'utilisateur est adapté de façon à signaler la libération par l'identifiant de combinaison de format de transport, E-TFCI, de canaux spécialisés améliorés, ou par le bit de satisfaction ("happy bit") sur le canal de commande de couche physique, E-DPCCH, de façon à indiquer la libération de la ressource de canaux spécialisés améliorés commune.

13. Equipement d'utilisateur selon l'une quelconque des revendications 8 à 12, dans lequel l'équipement d'utilisateur est configuré de façon à libérer les ressources de canaux spécialisés améliorés communes lors de la réception d'un accusé de réception, ACK, pour tous les processus de demande de répétition automatique hybride, HARQ, ou lors de l'atteinte du nombre maximal de transmissions de demande de répétition automatique hybride.

14. Equipement d'utilisateur selon l'une quelconque des revendications 8 à 13, dans lequel l'équipement d'utilisateur est adapté de façon à libérer la ressource de canaux spécialisés améliorés commune, E-DCH, lorsqu'un minuteur de réordonnancement a expiré pour la dernière unité de données de paquets, PDU, de commande d'accès de média, MAC.
